# FASCICULE DE BREVET EUROPEEN

(11) **EP 1 912 777 B1**
(45) Date de publication et mention de la délivrance du brevet: **06.08.2014**
(21) Numéro de dépôt: 06794332.4
(22) Date de dépôt: 16.08.2006
(51) Int. Cl.: B29C 49/58, B29C 49/42, F16K 27/00

(54) **MACHINE ROTATIVE DE SOUFFLAGE AVEC DES ENSEMBLES DE COMMANDE DU FLUX D'UN FLUIDE ET ENSEMBLE DE COMMANDE DU FLUX D'UN FLUIDE**
ROTATIONSBLASFORMMASCHINE MIT STEUERANORDNUNGEN ZUR DURCHFLUSSREGELUNG VON FLUIDEN UND VORRICHTUNG MIT SOLCH EINER STEUERANORDNUNG ZUR DURCHFLUSSREGELUNG VON FLUIDEN
ROTATING BLOW MOULDING APPARATUS WITH A FLUID FLOW CONTROL ASSEMBLIES AND CONTROL ASSEMBLY FOR FLUID FLOW

(30) Priorité: 12.08.2005 FR 0508545
(43) Date de publication de la demande: 23.04.2008
(73) Titulaire: Sidel Participations, 76930 Octeville Sur Mer (FR)
(72) Inventeur: LEBLOND, Régis, F-76930 Octeville Sur Mer (FR); LEMBLE, Thierry, F-76930 Octeville Sur Mer (FR); DANEL, Laurent, F-76930 Octeville Sur Mer (FR); ROBERT, Gilles, F-76930 Octeville Sur Mer (FR); GILLET, Denis, F-76930 Octeville Sur Mer (FR); RYMANN, Othmar, F-76930 Octeville Sur Mer (FR)
(74) Mandataire: Cabinet Plasseraud
(86) Numéro de dépôt international: PCT/FR2006/001951
(87) Numéro de publication internationale: WO 2007/020354

(56) Documents cités:
- EP-A- 1 535 720
- WO-A-02/34500
- DE-U1- 20 305 232
- US-A- 4 214 860

## Description

La présente invention concerne d'une manière générale le domaine de la fabrication des récipients en matériau thermoplastique, tel que par exemple le PET ou le PEN, par un processus de soufflage, notamment extrusion soufflage, injection soufflage, ou d'étirage-soufflage à partir d'une ébauche.

### Définition de certains termes employés

Les définitions qui suivent ne sont données qu'à fins de clarté.

Ces définitions font référence au vocabulaire pratiqué habituellement dans les métiers impliqués par la présente invention.

Par PET, on désigne le poly(-éthylène téréphtalate), c'est-à-dire un polyester obtenu par exemple par polycondensation, à partir d'acide téréphtalique et d'éthylène glycol.

Par PEN, on désigne le poly(-éthylène naphtalate). C'est également un polyester.

Par ébauche, on désigne une préforme ou un récipient intermédiaire.

Une préforme est généralement un objet sensiblement tubulaire fermé à une extrémité axiale et dont l'ouverture présente la forme définitive du col du corps-creux final, tel qu'une bouteille ou un flacon.

Par soufflage, on désigne un procédé dans lequel l'ébauche est placée dans un moule de finition contenant l'empreinte du récipient à obtenir, une tuyère de soufflage (ou nez de soufflage) mise en communication avec l'ouverture (le col) de cette ébauche, un fluide de soufflage sous haute pression plaquant la matière de l'ébauche contre les parois du moule. Le moule de finition est par exemple à portefeuille. Le fluide de soufflage est en général de l'air.

En injection soufflage, les ébauches sont souvent des préformes et sont obtenues par injection, les pressions de soufflage étant typiquement de l'ordre de 40 bars (40 x 10⁵ Pa).

Par étirage soufflage est désigné un procédé dans lequel une tige d'élongation, (appelée également canne) vient étirer la préforme dans le moule de soufflage, par appui contre la paroi de fond de la préforme. Un tel procédé est mis en oeuvré dans les machines dites à simple soufflage. Un tel procédé est notamment mis en oeuvre pour le soufflage de préformes préalablement injectées, l'étirage (ou élongation) étant réalisé avant ou pendant le soufflage de la préforme. Lorsque l'étirage précède le soufflage, un présoufflage est réalisé pour éviter notamment que la matière ne se resserre sur la tige d'élongation. Avant l'opération d'étirage-soufflage, les préformes en matériau thermoplastique sont chauffées dans un four de conditionnement pour être portées à une température supérieure à la température de transition vitreuse du matériau thermoplastique.

Par étirage soufflage est désigné ici également un procédé dans lequel une tige d'élongation vient étirer un récipient intermédiaire. Un tel procédé est mis en oeuvre dans les machines dites à double soufflage.

### Etat général de la technique

Une tuyère d'installation de soufflage comprend une extrémité conformée pour être mise en communication étanche avec l'intérieur d'une ébauche.

On connaît des installations de soufflage dans lesquelles l'extrémité dé la tuyère, en position fonctionnelle, coopère positivement avec le col de l'ébauche en étant soit aboutée de façon étanche contre le buvant (bord) du col de l'ébauche, soit emmanchée de façon étanche dans ou sur le col de l'ébauche.

L'extrémité de tuyère (parfois appelée nez de tuyère) est par exemple tronconique, le diamètre à la base de la tuyère étant inférieur à celui de l'ouverture de l'ébauche. L'étanchéité lors du soufflage est alors assurée par le contact entre le tronc de cône et le bord périphérique intérieur du buvant de l'ébauche.

On connaît également des installations de soufflage dans lesquelles l'extrémité de la tuyère est conformée en cloche plus grande que le col de l'ébauche et coiffe celui-ci en prenant appui frontalement, de façon étanche, contre la face du moule sur laquelle le col de l'ébauche fait saillie (voir par exemple le document FR 2 764 544).

De façon connue, la tuyère est agencée pour être mobile, en tout ou partie, axialement au-dessus du moule de soufflage entre :
- une position haute ou position relevée dans laquelle la tuyère n'est pas fonctionnelle (ouverture et fermeture du moule permettant le chargement d'une ébauche et le déchargement du récipient moulé)
- et une position basse ou position de soufflage dans laquelle l'extrémité de la tuyère coopère de façon étanche soit avec le col de l'ébauche, soit avec la face du moule au-dessus de laquelle fait saillie le col de l'ébauche et dans laquelle la tuyère est fonctionnelle.

Le soufflage de bouteilles en PET à partir de préformes est effectué le plus souvent par séquences :
- une phase de pré-soufflage de l'ébauche à l'aide d'un fluide (en général de l'air) sous moyenne pression (par exemple 7 x 10⁵ Pa à 12 x 10⁵ Pa), accompagné généralement d'un étirage axial mécanique au moyen de ladite tige d'élongation.
- puis une phase de soufflage proprement dite sous haute pression, par exemple 40 bars (40 x 10⁵ Pa)
- et enfin une phase d'échappement (ou dégazage) avec évacuation de l'air de pré-soufflage/soufflage. Le cas échéant, l'air de dégazage est récupéré. Un mécanisme dé silencieux est placé au dégazage.

Le pré-soufflage conduit typiquement à une augmentation de pression de 0 à 13 bars en 100 millisecondes environ. Le soufflage conduit typiquement à une augmentation de pression jusqu'à une valeur nominale de 23 bars en 100 millisecondes environ. Le dégazage est effectué typiquement en 300 millisecondes environ. Le pré-soufflage et le soufflage peuvent être en partie simultanés. Le contrôle des pressions dans le temps est d'une très grande importance pour la qualité des produits soufflés.

L'étirage d'une ébauche en PET et le pré-soufflage à moyenne pression (par exemple 7 x 10⁵ Pa) conduisent à une vitesse d'élongation axiale de l'ordre de 0.8 à 1.2 m/s, le contrôle de cette vitesse étant important pour la qualité du produit soufflé. L'étirage radial obtenu par soufflage à haute pression (par exemple 40 x 10⁵ Pa) permet de plaquer le matériau contre les parois du moule qui est refroidi, par exemple par circulation interne d'eau réfrigérée.

Les souffleuses industrielles permettent d'atteindre couramment 50 000 bouteilles par heure. Ces machines à grande cadence sont de type rotative et comportent plusieurs dizaines de dispositifs de moulage montés à la périphérie d'un carrousel.

Pour réaliser les phases de pré-soufflage soufflage/échappement, on commande classiquement séquentiellement trois électrovannes qui, d'un côté, sont raccordées respectivement à une source de fluide sous moyenne pression, une source de fluide sous haute pression et un échappement et qui, de l'autre côté, sont raccordées a la tuyère . Le document US-A-4214860 décrit un dispositif conformément au préambule des revendications 1 et 13.

### Problèmes techniques à résoudre

Parmi les problèmes techniques à résoudre, il est à noter qu'une installation de soufflage du type considéré fait une consommation très importante de fluide sous pression, dont une partie n'est pas nécessaire à la fabrication de l'article qu'il soit sous moyenne ou haute pression.

Le soufflage d'un corps creux d'un litre par étirage-soufflage nécessite typiquement 40 litres de fluide si la pression de soufflage est de 40 x 10⁵ Pa.

Il faut comprendre que le seul volume utile pour l'opération de soufflage est le volume du récipient amené dans sa forme finale contre les parois de la cavité de moulage du moule, autrement dit sensiblement le volume de la cavité de moulage.

Par contre, tous les volumes situés entre la sortie de l'électrovanne de présoufflage ou de soufflage et le col du récipient sont des volumes non utiles à proprement parler pour la déformation de l'ébauche et sont donc des volumes morts.

Pour la fabrication de bouteilles par soufflage, le volume mort représente ainsi la différence entre la totalité du volume à mettre en pression et le volume intérieur de la bouteille au raz du buvant, ou volume utile.

A chaque phase de présoufflage et de soufflage d'une ébauche, ces volumes morts sont remplis de fluide sous pression au même titre que le volume utile, ce qui implique une production de fluide sous pression sensiblement supérieure au besoin réel. Dans la plupart des machines de soufflage de l'art antérieur, les volumes morts sont d'un ordre de grandeur non négligeable par rapport aux volumes utiles.

Toute réduction de ces volumes morts s'avère bénéfique en terme de réduction possible de la puissance du compresseur de fluide et donc de son prix, et en terme de réduction de l'énergie électrique nécessitée par le fonctionnement du compresseur. La production en permanence et en grande quantité de fluide (air) sous pression entraîne une très forte consommation d'énergie électrique pour le fonctionnement du ou des compresseurs.

De ce fait, il existe une demande constante et pressante de la part des utilisateurs de ces installations de soufflage pour une réduction aussi forte que possible de la quantité de fluide sous pression utilisée, de manière à réduire la consommation d'énergie électrique.

Il est à noter également que les machines de soufflage fonctionnent à cadence de plus en plus élevée. Les cadences de fabrication sont de l'ordre de 1200 à 2000 récipients par heure et par moule dans les machines d'étirage-soufflage de la demanderesse. Même en prévoyant des durées de vie très élevées pour les électrovannes (de l'ordre de 30 millions de cycles), les interventions de maintenance et de réglage restent assez fréquentes sur ces électrovannes.

### Solutions techniques proposées dans l'art antérieur Volumes morts et problèmes techniques associés

a) Dans une première conception de la demanderesse, les électrovannes forment un bloc monté directement sur le corps de la tuyère, à l'emplacement du raccord du tube référencé 23 à la figure 1 du document FR 2 764 544.

Toutefois, dans cette première conception qui perdure actuellement, la juxtaposition des deux corps respectivement du bloc d'électrovannes et de la tuyère impose encore des passages de fluide d'une longueur conséquente, ce qui se traduit par un volume mort encore trop important en terme de consommation.

b) Une seconde conception, également issue de la demanderesse, a fait l'objet d'une demande de brevet français déposée le 23 juin 2004 sous le numéro FR 04/06844 (numéro de publication FR 2 872 082).

Selon cette seconde conception, la tuyère coulisse dans un corps pourvu de trois logements dans chacun desquels une électrovanne est incorporée : électrovanne de présoufflage, électrovanne de soufflage, électrovanne d'échappement. Cette tuyère entoure une tige d'élongation qui lui est coaxiale.

Un espace annulaire de passage d'air est délimité, dans ledit corps, par la tige d'élongation et la face intérieure de la tuyère. Chaque logement contenant une électrovanne est relié à cet espace annulaire par un conduit radial.

Un quatrième logement dans le corps peut recevoir une électrovanne de recyclage, laquelle est actionnée après le soufflage, tandis que l'électrovanne d'échappement est actionnée en dernier lieu pour l'élimination rapide du résidu de fluide de soufflage.

Les logements pour électrovanne sont équidistants, sensiblement cylindriques, parallèles ou perpendiculaires à l'axe de coulissement de la tuyère. Ces logements sont par exemple radiaux par rapport à cet axe de tuyère.

Lorsque chaque électrovanne est disposée radialement par rapport à l'alésage central du corps dans lequel coulisse la tuyère, le noyau mobile de chaque électrovanne peut être monté directement dans le logement usiné à cet effet, et la face frontale de ce noyau mobile peut affleurer la paroi latérale de l'alésage et être dans la continuité de cette paroi latérale. Grâce à cet agencement, le volume mort en aval du noyau mobile est réduit de façon très significative.

Cette seconde conception présente quelques inconvénients. En particulier, elle nécessite de disposer d'un libre accès aux différents côtés du corps, ce qui peut ne pas être possible dans certaines configurations d'installation.

En effet, selon un mode particulier de réalisation, les tuyères de soufflage sont placées dans une installation de soufflage les unes à côté des autres, sur un carrousel, à proximité de la périphérie de ce carrousel.

Afin d'augmenter les cadences de production, il conviendrait d'augmenter le nombre de tuyères autour de cet arbre central ou d'augmenter le volume global de l'installation, cette dernière solution n'étant pas souhaitée.

L'accès aux parties latérales d'une tuyère peut donc être assez délicat et malaisé dans le cas où le nombre de tuyères sur le carrousel dépasse une certaine valeur, entraînant un espace d'intervention limité entre deux tuyères successives.

Il convient donc de limiter la présence de pièces fixées sur les faces latérales d'une tuyère pour éviter des opérations de maintenance sur ces faces et ainsi pouvoir augmenter le nombre de tuyères autour d'un même arbre central d'un carrousel tout en n'augmentant pas le volume global de l'installation.

c) Une troisième conception est illustrée par le document EP 1 328 396.

Dans cette troisième conception, le support de vannes est de section rectangulaire et une vanne haute pression, une vanne basse pression, deux vannes d'échappement sont disposées à une même hauteur sur deux faces opposées de ce support de vannes. Des conduits internes aussi courts que possible mettent les chambres des vannes en liaison de fluide avec l'orifice axial de coulissement de la tige d'élongation.

Cette troisième conception s'avère peu pratique à l'usage. Ainsi qu'il a été dit précédemment, les machines à grande cadence sont rotatives. Lorsque des blocs supports de vannes du type décrit dans le document EP 1 328 396 sont employés, les vannes sont, pour un observateur placé devant un moule de soufflage, placées à droite et à gauche de chaque bloc support, l'encombrement latéral de ces soupapes et de leurs organes de commande étant très défavorable à la compacité de la machine, et tel que cela a été explicité ci-dessus en rapport avec la seconde conception.

d) Selon une quatrième conception telle que décrite dans le document EP 1 535 720, il est présenté un ensemble de commande du flux d'un fluide pour machine de soufflage, cet ensemble comprenant des conduits d'arrivée et d'évacuation de fluide, une buse de soufflage et une pluralité de soupapes pour commander l'air de soufflage dans les différents conduits.

Toutefois, selon cet art antérieur, les différentes soupapes sont disposées en relation étroite avec la buse de soufflage et il est alors nécessaire de démonter le corps qui loge la buse de soufflage si on doit réparer ou changer les soupapes.

Il serait donc particulièrement intéressant de réaliser un ensemble de commande de soufflage ne nécessitant pas de démonter ou d'agir sur la buse de soufflage quand on doit effectuer des opérations de maintenance ou de réparation sur les soupapes de commande des fluides de soufflage.

### Objets de l'invention

L'invention a donc pour but de tenter de satisfaire, dans toute la mesure du possible, ces exigences permanentes des utilisateurs et de proposer un agencement perfectionné d'installation de soufflage qui conduise à un meilleur compromis entre :
- d'une part, de faibles volumes morts dans le circuit d'amenée du fluide sous pression ;
- et d'autre part, des ensembles structurels de commande du flux d'un fluide de soufflage pour une installation de soufflage qui sont légers, compacts, de maintenance facilitée, avec un accès rapide aux soupapes sans contraintes d'encombrement, notamment latéral, du fait de la présence d'une pluralité d'ensembles fonctionnels situés autour d'un arbre central du carrousel ; l'ensemble selon l'invention permettant également d'éviter de démonter le corps logeant la buse de soufflage lors d'opérations de maintenance ou de remplacement des soupapes.

### Présentation générale de l'invention

A ces fins l'invention se rapporte, selon un premier aspect et comme détaillé dans la revendication 1, à une machine rotative de soufflage de récipients, incorporant plusieurs dispositifs de moulage et des ensembles de commande du flux de fluide de soufflage qui comprennent : une buse de soufflage, une pluralité de conduits de circulation d'un fluide de soufflage, des soupapes aptes à commander la circulation du fluide de soufflage.

Chaque ensemble de commande du flux de fluide de soufflage présente, selon diverses réalisations, les caractères suivants, le cas échéant combinés :
- la pluralité de conduits comprend des conduits internes au corps logeant la buse de soufflage et reliant les soupapes à la buse de soufflage ;
- la pluralité de conduits comprend des conduits internes au corps logeant la buse de soufflage et reliant ladite au moins une source de fluide de soufflage et ladite au moins une évacuation de fluide de soufflage aux soupapes ;
- les soupapes sont logées dans un corps monté de manière amovible sur l'avant du bloc logeant la buse de soufflage ; il est ainsi possible de changer en une seule opération rapide l'ensemble du bloc de soupapes ; ceci est avantageux notamment lorsque l'opérateur ne sait pas ou n'a pas le temps de déterminer quelle soupape est défaillante;
- l'ensemble de commande comprend un flasque foré monté de manière amovible sur l'arrière du corps logeant la buse de soufflage et sur lequel sont raccordées ladite au moins une source de fluide de soufflage et ladite au moins une évacuation du fluide de soufflage ;
- le flasque comprend des conduits internes reliant ladite au moins une source de fluide et ladite au moins une évacuation de fluide de soufflage aux conduits internes du corps logeant la buse de soufflage ;
- le flasque foré et/ou le bloc logeant les soupapes sont montés par vissage sur le corps logeant la buse de soufflage, et les têtes de ces vis sont orientées vers l'avant de l'ensemble de commande ; les montages et démontages peuvent ainsi être effectuées sans peine depuis l'avant de l'ensemble, ce qui est très avantageux pour les opérations de maintenance de machines rotatives de soufflage comprenant plusieurs dizaines d'ensembles de commande ;
- l'ensemble de commande comprend une tige d'élongation mobile axialement dans la buse de soufflage, cette tige d'élongation traversant le corps foré logeant la buse de soufflage ;
- les soupapes comprennent une soupape reliée à une première source de fluide de soufflage et une soupape reliée à une seconde source de fluide de soufflage à une pression plus élevée que le fluide de soufflage de la première source ;
- l'ensemble de commande comprend une soupape de détente reliée à la buse de soufflage et apte à évacuer le fluide de soufflage soufflé dans le récipient vers ladite au moins une évacuation ;
- l'ensemble de commande comprend une soupape de recyclage apte à recycler le fluide de soufflage soufflé dans le récipient en l'envoyant dans une source de fluide de soufflage ; cette configuration optionnelle permet, pour autant que de besoin, une économie sur le poste de production de fluide sous pression ; la soupape de recyclage est reliée à un circuit de recyclage ou de réutilisation d'air, par exemple en étant dirigée vers une source à pression moindre employée pour le pré soufflage ;
- les soupapes sont placées dans des logements élancés suivant une direction sensiblement perpendiculaire à la buse de soufflage ;
- l'ensemble de commande comprend un boîtier logeant les pilotes de commande des soupapes, ce boîtier étant monté de manière amovible sur l'avant du bloc logeant les soupapes ;
- le boîtier est monté par vissage à l'aide de vis sur le bloc logeant les soupapes, les têtes de ces vis sont orientées vers l'avant de l'ensemble ;
- les soupapes sont des électrovannes ;
- les pilotes de commandes des électrovannes sont électromécaniques ou électro-pneumatiques ;
- chaque logement des électrovannes prévu dans le bloc logeant les électrovannes est usiné de manière à définir, directement dans ledit bloc logeant les électrovannes, la chambre de l'électrovanne propre à abriter le noyau mobile de l'électrovanne ;
- chaque logement du bloc logeant les électrovannes est conformé pour recevoir une électrovanne-cartouche respective ; une électrovanne cartouche comporte un boîtier définissant une chambre et pourvu d'un siège. La chambre loge un noyau mobile (ou piston) ; le siège peut recevoir en appui étanche ce noyau mobile dont la tête forme clapet lorsqu'elle est en appui étanche contre ce siège ; la paroi du boîtier est percée d'au moins une lumière en communication avec un conduit d'amenée de fluide ; un capot de fermeture du boîtier de l'électrovanne est fixé sur une paroi du corps, un dispositif de pilotage de l'électrovanne est monté sur ce capot ; ce dispositif de pilotage est de type pneumatique.

Selon un second aspect de l'invention, l'invention porte aussi sur un ensemble de commande du flux de fluide de soufflage comme détaillé dans la revendication 13.

Avantageusement, la commande du mouvement de la buse de soufflage est assurée au moyen d'un équipage guidé solidaire de l'ensemble de commande, et actionnée par une came sur un galet.

Avantageusement, la buse est pourvue d'une gorge, une fourchette guidée dans cette gorge assurant la transformation du mouvement du galet sur la came en un mouvement de coulissement de l'équipage mobile et de la buse de soufflage.

Selon une première forme de réalisation, la contre force exercée pour le maintien du galet de commande sur la came est établie par un ressort mécanique ou par un ressort pneumatique intégré sous la forme d'un piston solidaire et concentrique à la buse de soufflage, ce ressort pneumatique translatant dans une chambre dont la partie supérieure est sous pression.

Selon une seconde forme de réalisation, la commande du mouvement de la buse de soufflage est assurée pneumatiquement, la buse étant solidaire d'un piston concentrique, translatant dans une chambre dont les parties supérieure et inférieure sont reliées à un distributeur pneumatique.

Avantageusement, la position basse de la buse de soufflage est réalisée par une butée réglable sur cette buse de soufflage, butée venant s'arrêter par un contact amorti sur la partie supérieure du bloc logeant la buse de soufflage.

Les structures de l'ensemble de commande et de l'installation telles que présentées offrent de nombreux bénéfices.

L'invention offre en particulier un excellent compromis : gain de coût (agencement plus économique), gain de place (possibilité d'un agencement plus compact et/ou place disponible pour le montage d'autres composants), un gain de poids (réduction de l'inertie sur une structure tournante du type carrousel), volumes morts réduits.

### Liste des figures annexées

L'invention sera mieux comprise à la lecture de la description détaillée qui suit de certains modes de réalisation préférés donnés à titre purement illustratif et nullement limitatif.

Dans cette description, on se réfère aux dessins annexés sur lesquels :
- la figure 1 est une vue en perspective d'un ensemble de commande d'un flux de fluide de soufflage selon un mode de réalisation de l'invention ;
- la figure 2 est une vue en coupe longitudinale d'un ensemble de commande du type représenté en figure 1 ;
- les figures 3 et 4 sont des vues en volume des conduits internes de passage de fluide de soufflage pour l'ensemble de commande représenté en figure 1 et 2, selon deux variantes de réalisation ;

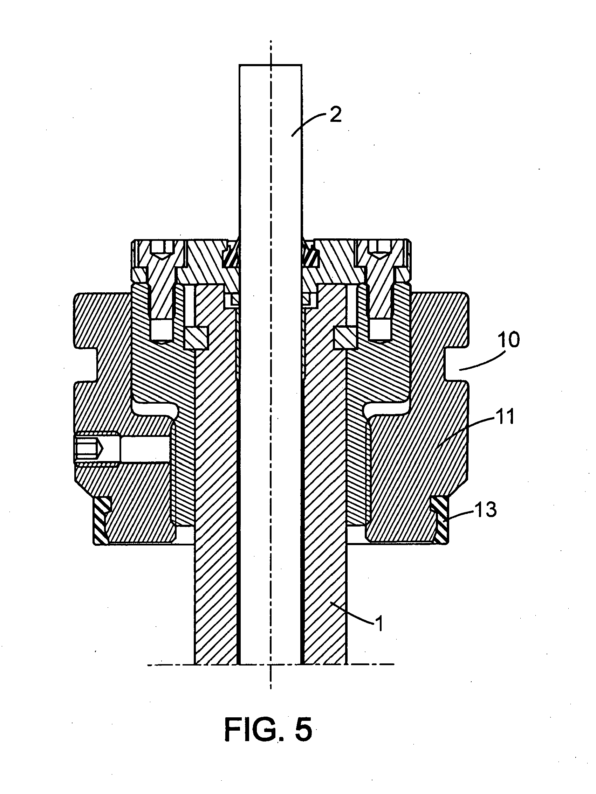

- la figure 5 est une vue de détail d'une partie de la figure 2 ;
- la figure 6 est une vue frontale d'un ensemble de commande selon un mode de réalisation de l'invention avec, en pointillés, les logements des soupapes et les conduits internes reliant les soupapes à la tuyère de soufflage ;
- la figure 7 est une vue en perspective du flasque arrière sur lequel sont aptes à être fixées au moins une source de fluide de soufflage et au moins une évacuation du fluide de soufflage, les différents conduits de passage du fluide étant représentés en pointillés ;
- la figure 8 est une vue frontale agrandie de la figure 6 représentant les différentes soupapes et les conduits de passage de fluide reliant les soupapes à la tuyère de soufflage ;
- la figure 9 est une vue en perspective arrière du bloc central logeant la buse de soufflage avec les différents conduits de passage de fluide reliant le flasque arrière au bloc logeant les soupapes ainsi que les différents conduits de passage de fluide reliant les soupapes à la tuyère de soufflage;
- la figure 10 est une seconde vue en perspective de l'ensemble de commande selon l'invention avec la fourchette de guidage du coulissement de la buse de soufflage, et
- la figure 11 est une vue en coupe planaire de l'ensemble de commande prise selon le plan A-A de la figure 6 perpendiculaire à l'axe longitudinal défini par la buse de soufflage.

### Description détaillée de modes de réalisation

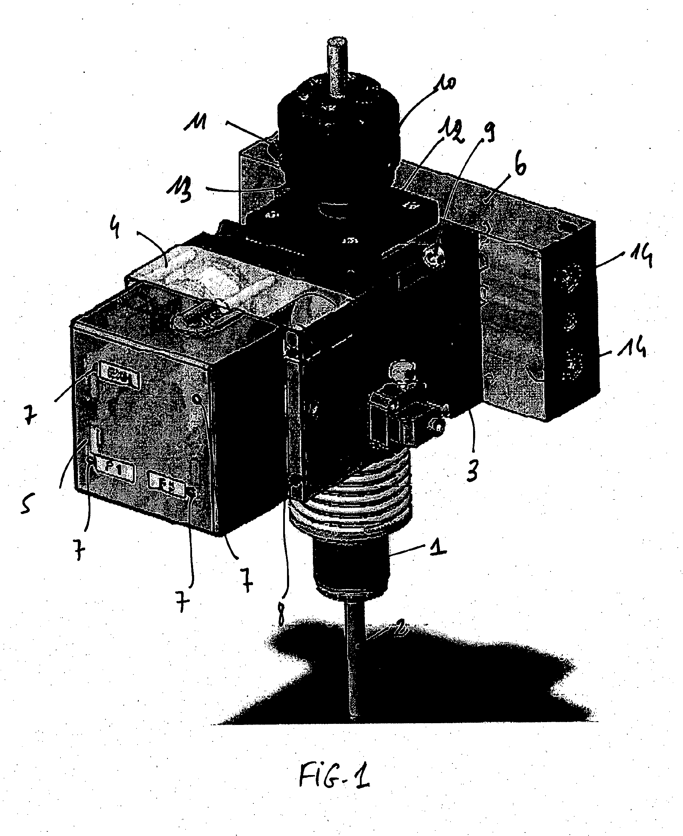

L'on se rapporte tout d'abord à la figure 1.

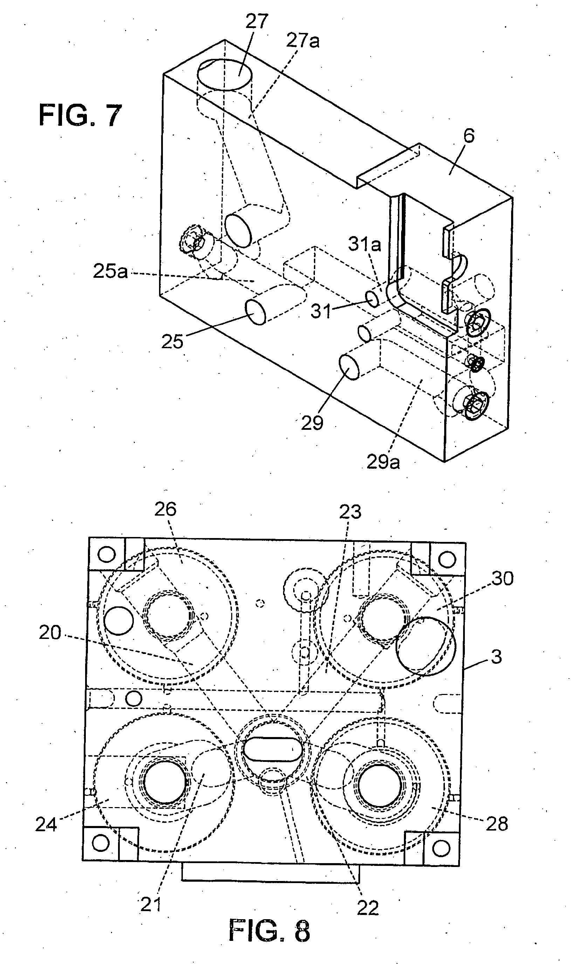

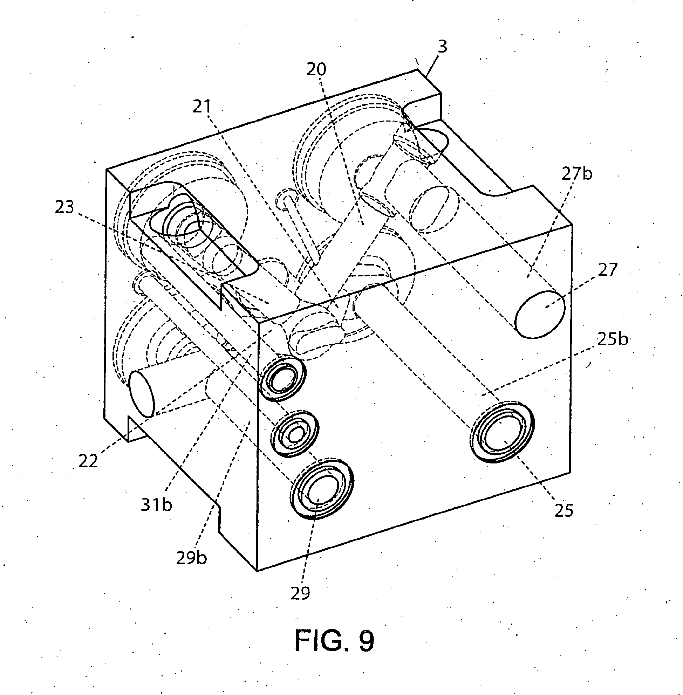

Une buse 1 de soufflage et une tige 2 d'élongation sont montées, de manière connue en soi, axiales et traversant un corps 3 pourvu de conduits internes de passage de fluide de présoufflage, soufflage et d'échappement/dégazage, ces conduits étant notamment illustrés dans les figures 7 et 9 et décrits de manière plus précise ci-dessous.

La tige 2 d'élongation est mobile axialement dans la buse 1 de soufflage et traverse le corps 3 foré logeant la buse 1 de soufflage.

Ce corps 3 est de section rectangulaire et d'enveloppe sensiblement cubique.

De manière générale, la présente invention porte sur un ensemble de commande du flux d'un fluide de soufflage pour une machine de soufflage, ledit ensemble comprenant une buse 1 de soufflage ; une pluralité de conduits de circulation d'un fluide de soufflage permettant la circulation du fluide de soufflage entre au moins une source de fluide de soufflage, au moins une évacuation de fluide de soufflage, et la buse 1 de soufflage ; et des soupapes aptes à commander la circulation du fluide de soufflage dans la pluralité de conduits de circulation du fluide.

Il est entendu dans la suite de la description par la notion de « avant » ou « frontal » un élément, une zone ou une partie de l'ensemble selon l'invention situé du même côté que le côté où s'ouvrent et se ferment les moules de soufflage par opposition à « l'arrière », correspondant au côté où se trouve l'axe de fermeture/ouverture du moule de soufflage.

Dans le cas d'une machine de soufflage où les ensembles de commande sont disposés les uns à côté des autres de manière à former une boucle rotative autour d'un arbre central d'un carrousel, chaque ensemble étant entouré de part et d'autre par un ensemble de commande identique, il est alors entendu par la notion de « avant » ou « frontal » un élément, une zone ou une partie de l'ensemble de commande qui est placé(e) radialement vers l'extérieur de la boucle rotative de circulation des ensembles fonctionnels. De manière similaire, il est alors entendu par élément « arrière » un élément placé radialement vers l'intérieur de la boucle rotative de circulation des ensembles de commande, et situé à l'opposé d'un élément placé sur l' « avant ».

L'ensemble fonctionnel ou de commande du flux d'un fluide de soufflage selon l'invention comprend un corps 3 présentant un alésage axial dans lequel est déplaçable, sous l'action de moyens de commandes généralement pneumatiques, un élément mobile ou tuyère en forme de tige tubulaire dont une partie peut être agencée en forme de piston. Pour fixer les idées, l'agencement du corps 3 et de la tuyère mobile peut par exemple être du type illustré à la figure 1 du document FR 2 764 544. A son extrémité inférieure, la tuyère mobile est conformée selon toute manière souhaitée pour pouvoir être mise en relation fonctionnelle étanche avec le col ou goulot d'une ébauche de récipient, par exemple une préforme ou la face supérieure d'un moule de soufflage, afin de coiffer le col de l'ébauche.

D'une manière classique, la tuyère mobile en forme de tige tubulaire entoure une tige 2 d'élongation qui lui est coaxiale et qui est elle-même déplaçable axialement, au cours du soufflage, pour entraîner mécaniquement le fond de l'ébauche, selon une technique connue. La tige 2 d'élongation est maintenue en position coaxiale par des organes de guidage non représentés sur les figures. Le diamètre de la tige 2 d'élongation est inférieur à celui de la face intérieure de la tuyère mobile de manière à définir un passage annulaire axial destiné à l'amenée du fluide de présoufflage et du fluide de soufflage et à l'évacuation de ce fluide en fin de processus.

En partie avant de ce corps 3, un bloc 4 contenant des logements pour des soupapes, avantageusement des électrovannes est monté amovible sur une seule face du corps 3, par exemple par vissage, et, de manière plus précise, le bloc 4 est situé sur la face avant ou frontale du corps 3. Les soupapes sont donc logées dans un seul bloc 4 monté de manière amovible sur l'avant du corps 3 logeant la buse 1 de soufflage.

Monté de manière amovible sur l'avant du bloc 4 logeant les soupapes, c'est-à-dire sur une même face du bloc 4 logeant les soupapes, un boîtier 5 loge les pilotes de commandes des soupapes, ainsi que des diodes 7 de visualisation d'état des pilotes de commandes des électrovannes.

Les soupapes logées dans le bloc 4 sur l'avant du corps 3 sont avantageusement des électrovannes à siège, de type connu en soi, et les pilotes de commandes des soupapes logés dans le boîtier 5 sont électromagnétiques ou électropneumatiques.

Un flasque 6 foré, et tel que représenté en perspective à la figure 7, pourvu de conduits internes 25a, 27a, 29a, 31a de passage de fluide de soufflage, aussi bien sous moyenne que sous haute pression ou pour le recyclage et/ou l'évacuation d'air, est placé en face arrière du corps 3. Ce flasque 6 est monté en face arrière de manière amovible sur le corps 3 logeant la buse de soufflage, par exemple par vissage.

Au moins une source du fluide de soufflage est avantageusement raccordée au flasque 6 foré arrière et plus précisément au moins une source de fluide de soufflage à moyenne pression et une source de fluide de soufflage à haute pression. De plus, il est également prévu de raccorder au moins une évacuation de fluide de soufflage sur le flasque 6 arrière permettant d'évacuer l'air de soufflage soit dans l'atmosphère, soit vers une source de fluide de soufflage, par exemple la source de fluide de soufflage à moyenne pression ou une source de fluide de soufflage à une pression inférieure.

De même, il est également prévu dans le corps 3 logeant la buse 1 de soufflage des conduits ou perçages internes 25b, 27b, 29b, 31b reliant les conduits internes 25a, 27a, 29a, 31a du flasque 6 aux soupapes, ces conduits ou perçages internes 25b, 27b, 29b, 31b permettant notamment le passage et l'alimentation des soupapes en fluide sous moyenne ou haute pression issu des conduits internes 25a, 27a, 29a, 31a du flasque 6.

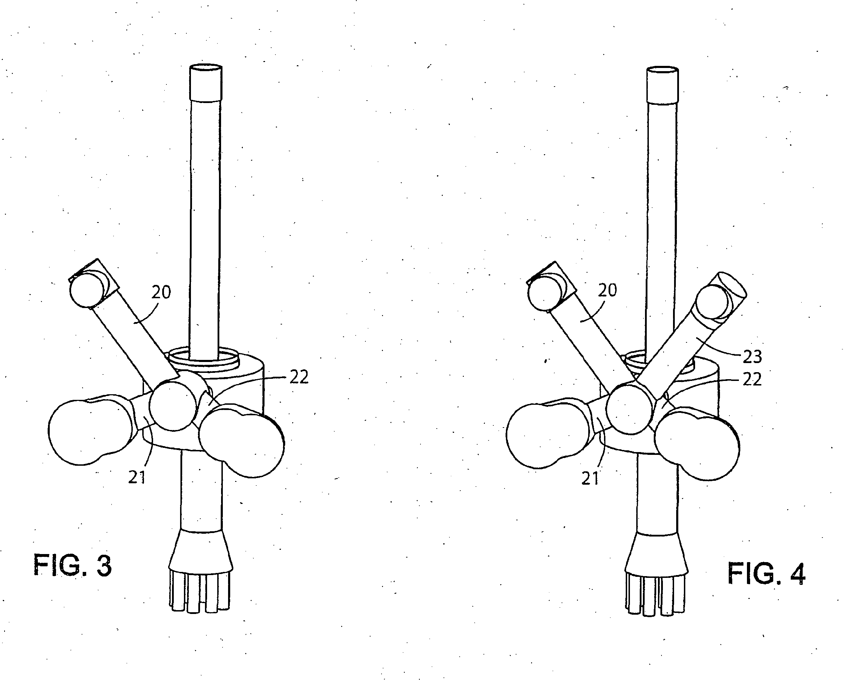

Les soupapes sont reliées à la tuyère de la buse 1 de soufflage par des conduits internes au corps 3 logeant la buse 1 de soufflage, et plus précisément par l'intermédiaire d'un conduit axial principal présentant une pluralité de conduits secondaires 20, 21, 22, 23, chaque conduit secondaire 20, 21, 22, 23 étant directement relié à une soupape. Le conduit axial principal et les conduits secondaires 20, 21, 22, 23 sont représentés de manière plus détaillée dans les figures 3 et 4.

La buse 1 de soufflage forme la partie inférieure d'un ensemble se comportant comme un piston, ce piston appartenant à un vérin dont le cylindre serait le corps 3.

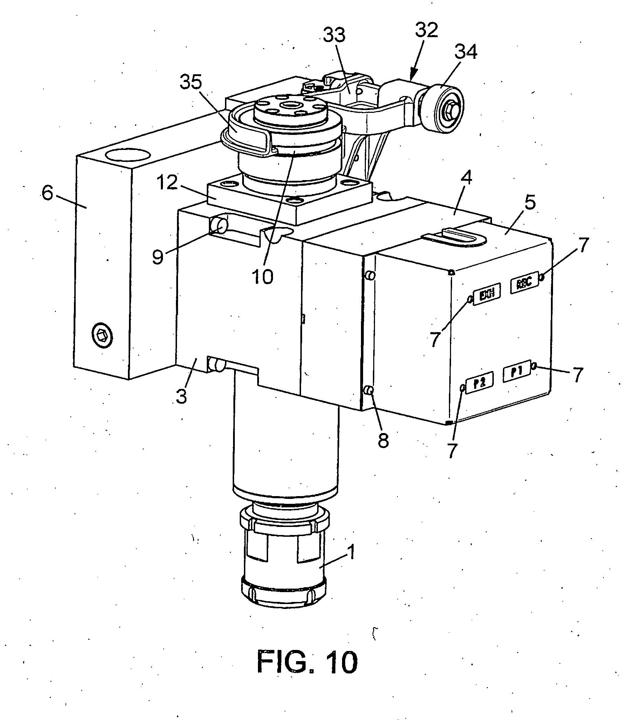

Des moyens de commande 32, partiellement représentés sur la figure 10, provoquent le mouvement de descente de ce piston et donc de la buse de soufflage, jusqu'au contact étanche de cette buse avec l'intérieur de l'ébauche à souffler. Ces moyens de commande viennent en prise avec une gorge 10 annulaire externe d'une pièce tubulaire solidaire de la partie supérieure du piston ou de la buse 1 de soufflage.

Un couvercle 12 transversal est monté sur le corps 3. En position fin de course, un joint annulaire amortisseur est plaqué contre ce couvercle 12.

En d'autres termes, l'ensemble fonctionnel ou de commande représenté sur la figure 1 comprend ainsi:
- un corps 3 de vérin dont l'enveloppe extérieure intègre sur l'avant les soupapes moyenne pression de présoufflage, haute pression de soufflage, dégazage et optionnellement de recyclage d'air ;
- un bloc 4 foré flasqué sur l'avant du corps 3 de vérin et contenant les soupapes ;
- un ensemble logeant les pilotes, par exemple électropneumatiques, pour la commande des soupapes, cet ensemble étant logé dans le boîtier 5 monté de manière amovible sur l'avant du bloc 4 foré logeant les soupapes: Avantageusement, le boîtier 5 est monté par vissage à l'aide de vis 8 sur le bloc 4 logeant les soupapes, les têtes de ces vis 8 étant orientées vers l'avant de l'ensemble de commande ;
- un flasque 6 foré placé à l'arrière du corps 3 de vérin, ce flasque 6 formant interface pour la connexion aux conduits fluidiques, c'est-à-dire pour l'alimentation de l'ensemble en air sous moyenne et haute pression et pour son recyclage et échappement.

Ainsi qu'il apparaît notamment sur la figure 1, les faces latérales de l'ensemble fonctionnel ou de commande sont particulièrement accessibles. Les ensembles fonctionnels ou de commande peuvent ainsi être très proches les uns des autres, par exemple dans une machine rotative de soufflage, cette machine pouvant être ainsi de grande capacité et compacte, les opérations de maintenance sur les ensembles fonctionnels restant faciles, tous les organes de ces ensembles pouvant être montés et démontés depuis l'avant de la machine.

Le flasque 6 foré reçoit sur sa face arrière les raccords des connexions des énergies fluidiques, avantageusement par connexion rapide. Le corps 3 de vérin de la tuyère vient se fixer au moyen de quelques vis 9 sur le flasque 6 et les connexions fluidiques du vérin sont réalisées par cette seule opération.

Pour le démontage lors des opérations de maintenance des soupapes, il est inutile de déconnecter les conduits de fluides, le flasque 6 reste sur la machine.

En effet, le flasque 6 foré arrière et/ou le bloc 4 logeant les soupapes sont montés par vissage sur le corps 3 logeant la buse 1 de soufflage, les têtes des vis étant orientées vers l'avant de l'ensemble de commande.

Lors du remontage, des pions de centrage (non représentés) garantissent le bon positionnement du corps 3 de vérin sur le flasque 6 arrière : aucun réglage n'est à reprendre.

On décrit maintenant les moyens de translation de la buse 1 de soufflage et tels que partiellement représentés sur la figure 10.

Selon une première forme de réalisation, la commande du mouvement de coulissement vertical de la buse 1 de soufflage est assurée à l'aide de moyens de commande 32 et plus précisément d'un équipage 33, mobile, guidé et solidaire de l'ensemble de commande, et est actionné par une came sur un galet 34. L'équipage 33 guidé est ainsi mobile en fonction du déplacement du galet 34 sur la came et de la distance entre la came et l'ensemble de commande Le mouvement est transmis de l'équipage 33 guidé mobile à la buse 1 par une fourchette 35 guidée et placée dans la gorge 10 de la buse 1. Ainsi, la fourchette 35 solidarisée dans la gorge 10 assure la transformation du mouvement du galet 34 sur la came en un mouvement de coulissement vertical de l'équipage 33 mobile et de la buse 1 de soufflage.

La contre force exercée pour le maintien du galet 34 de commande sur la came peut être établie de deux façons distinctes :
- soit par un ressort mécanique, de type connu en soi ;
- soit par un ressort pneumatique, de type connu en soi, intégré sous la forme d'un piston solidaire et concentrique à la buse 1, translatant dans une chambre dont la partie supérieure est sous pression. Le réglage de la pression permet d'ajuster la valeur de la force. La chambre inférieure peut ainsi être utilisée pour une commande de remontée de la tuyère.

Dans une autre réalisation, la commande du mouvement de translation de la buse est assurée pneumatiquement. Autrement dit, la buse 1 est solidaire d'un piston concentrique, translatant dans une chambre dont les parties supérieure et inférieure sont reliées à un distributeur pneumatique.

On décrit maintenant le positionnement de la buse 1.

La position basse de la buse 1 est réalisée et obtenue par une buttée 11 réglable sur la buse 1, venant s'arrêter par un contact amorti 13 (uniquement représenté sur la figure 1) sur la partie supérieure du vérin, c'est-à-dire sur la partie supérieure du corps 3 logeant la buse 1 de soufflage.

Cette configuration offre au moins deux avantages :
- les réglages de position basse de la buse 1 n'affectent pas la position de l'ensemble gorge 10/ fourchette 35/ équipage 33 guidé/ galet 34. La position relative de la came par rapport au galet 34 n'a pas à être modifiée en cas de modification de la position basse de la buse ;
- l'embout rapporté sur la buse, et comportant le joint d'étanchéité pour le soufflage des corps creux, n'a pas à être réglable sur la buse. L'opération de remplacement de ce joint est plus simple et rapide.

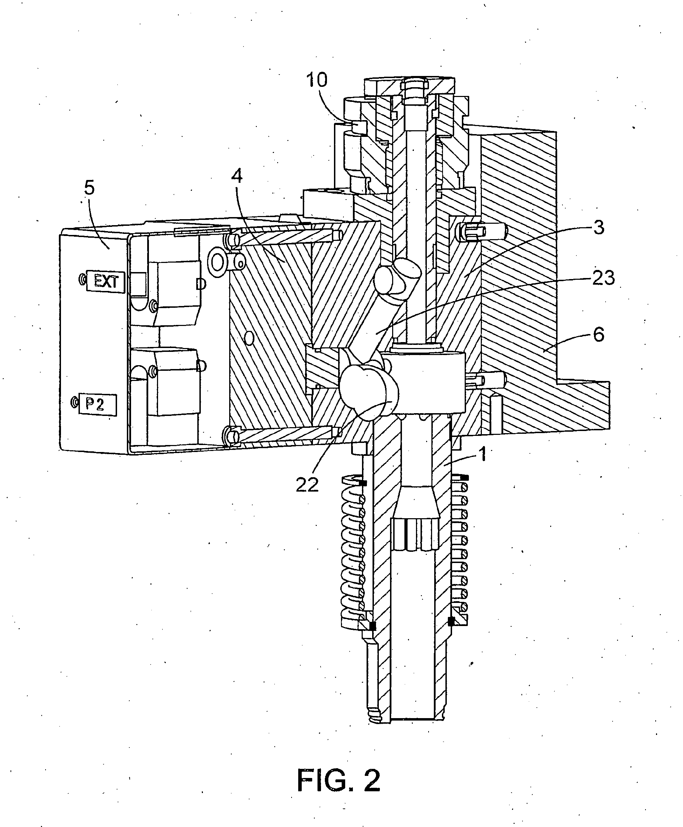

Les figures 3 et 4 représentent les volumes morts associés à deux réalisations d'ensemble du type général représenté en figures 1 et 2. Sur la figure 3, les conduits 20, 21, 22 secondaires correspondent respectivement aux canaux de passage d'air de soufflage, présoufflage et échappement et respectivement connectés aux logements de soupapes de soufflage, présoufflage et échappement. En figure 4, un canal 23 supplémentaire est affecté au recyclage et est connecté au logement d'une soupape de recyclage.

Il est ainsi prévu dans l'ensemble de commande selon l'invention une pluralité de conduits comprenant des conduits 20, 21, 22, 23 internes au corps 3 logeant la buse 1 de soufflage et reliant les soupapes à la buse 1 de soufflage, ainsi que des conduits 25b, 27b, 29b, 31b internes au corps 3 logeant la buse 1 de soufflage et reliant au moins une source de fluide de soufflage et au moins une évacuation de fluide de soufflage (ces sources étant toutes deux raccordées sur la flasque 6 arrière) aux soupapes.

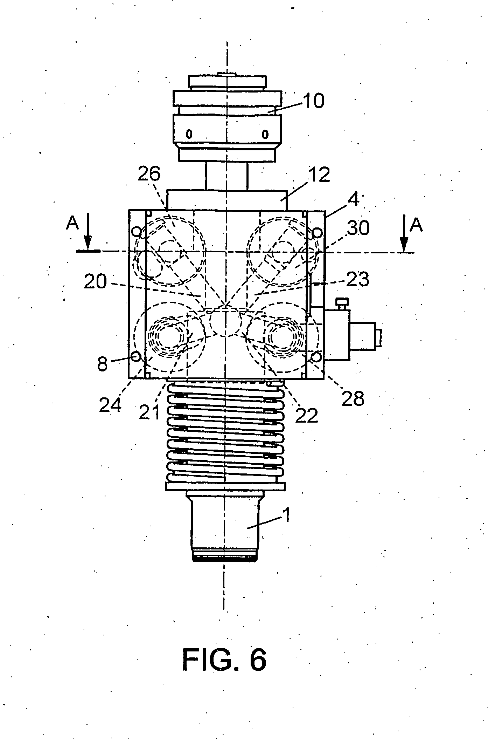

Les figures 6 et 8 représentent de manière plus précise des vues frontales de l'ensemble de commande selon l'invention avec les différents logements des soupapes et les conduits reliant les soupapes à la tuyère de soufflage.

En effet, de manière préférentielle, le bloc 4 contient une pluralité de logements pour des soupapes, à savoir :
- un premier logement 24 d'une soupape, dite soupape de présoufflage ou soupape moyenne pression, raccordant la tuyère à une source de fluide sous moyenne pression, c'est-à-dire à une pression inférieure ou légèrement supérieure à une dizaine de bars, par l'intermédiaire d'un conduit 25 de présoufflage constitué d'une première partie constituée par le conduit 25a susmentionné dans le flasque 6 arrière et d'une seconde partie constituée par le conduit 25b susmentionné, illustré à la figure 9, traversant le corps 3 central et permettant le présoufflage du récipient, ledit conduit 25 de présoufflage étant alimenté par une source de moyenne pression par raccordement de cette source sur le flasque 6 arrière, la soupape étant connectée à la tuyère de soufflage par l'intermédiaire d'un conduit 21 secondaire de présoufflage, tel qu'illustré plus précisément dans les figures 3 et 4 ;
- un second logement 26 d'une soupape, dite soupape de soufflage ou soupape haute pression, raccordant la tuyère à une source de fluide sous haute pression, c'ést-à-dire à une pression de plusieurs dizaines de bars, avantageusement 40 bars (40 x 10⁵ Pa), par l'intermédiaire d'un conduit 27 de soufflage constitué d'une première partie constituée par le conduit 27a dans le flasque 6 arrière et d'une seconde partie constituée par le conduit 27b traversant le corps 3 central et permettant le soufflage de la préforme à haute pression par l'intermédiaire du raccordement de la soupape haute pression à la tuyère par l'intermédiaire d'un conduit 20 secondaire de soufflage;
- un troisième logement 28 d'une soupape, dite soupape d'échappement ou de détente, raccordé à la tuyère par un conduit 22 secondaire d'échappement pour l'échappement d'air, qui est actionnée pour l'élimination rapide du résidu de fluide de présoufflage/soufflage dans l'ébauche et raccordé à au moins une évacuation de fluide par un conduit 29 d'échappement constitué d'une première partie constituée par le conduit 29a dans le flasque 6 arrière et d'une seconde partie constituée par le conduit 29b dans le corps 3 central, et
- de manière optionnelle, un quatrième logement 30 d'une soupape, dite soupape de recyclage, qui est actionnée après l'étape de soufflage et est raccordée à la tuyère par un conduit 23 secondaire de recyclage et à une source de recyclage en fluide, par exemple à la source à moyenne pression ou à une source à faible pression, par un conduit 31 de recyclage constitué d'une première partie constituée par le conduit 31a dans le flasque 6 arrière et d'une seconde partie constituée par le conduit 31b dans le corps 3 central. En effet, après le soufflage, le fluide qui est évacué est encore sous une pression significative et peut être récupéré pour être dirigé vers une source de fluide sous pression moyenne ou faible (par exemple pour le présoufflage). La soupape de recyclage est actionnée après le soufflage tandis que la soupape d'échappement est actionnée en dernier lieu pour l'élimination du résidu de fluide de soufflage dans le récipient soufflé.

Comme cela a été décrit précédemment, une séquence de soufflage comprend normalement une phase de présoufflage de l'ébauche à l'aide d'un fluide (en général de l'air) sous une pression moyenne (par exemple 7 x 10⁵ Pa), puis une phase de soufflage proprement dite sous haute pression (par exemple 40 x 10⁵ Pa) accompagnée généralement d'un étirage axial mécanique au moyen de la tige 2 d'élongation, éventuellement une phase de recyclage et enfin une phase d'échappement avec évacuation de l'air de présoufflage/soufflage vers une évacuation de fluide de soufflage raccordée au flasque 6 arrière. Pour ces différentes phases, on commande séquentiellement les soupapes de présoufflage, de soufflage, éventuellement de recyclage, et d'échappement.

Pour ce faire et de manière résumée, l'ensemble de commande comprend une pluralité de soupapes, dont une soupape reliée à une première source de fluide de soufflage (par exemple une source à moyenne pression) et une soupape reliée à une seconde source de fluide de soufflage à une pression plus élevée que le fluide de soufflage issu de la première source (par exemple une source à pression élevée). Il est également prévu une soupape de détente reliée à la buse 1 de soufflage et apte à évacuer le fluide de soufflage soufflé dans le récipient vers au moins une évacuation de fluide de soufflage, ainsi qu'une soupape de recyclage apte à recycler le fluide de soufflage soufflé dans le récipient, par exemple le fluide de soufflage soufflé à haute pression, pour le renvoyer vers la source de fluide à pression moyenne ou une autre source de fluide de soufflage.

Avantageusement, les différents logements 24, 26, 28, 30 des soupapes sont élancés radialement, c'est-à-dire suivant une direction sensiblement perpendiculaire à la buse 1 de soufflage, c'est-à-dire perpendiculaire à l'axe défini par la buse 1 et la tige 2 d'élongation.

Selon une première forme de réalisation des électrovannes, chaque logement 24, 26, 28, 30 des électrovannes est usiné de manière à définir, directement dans le bloc 4 logeant les électrovannes, la chambre de l'électrovanne propre à abriter le noyau mobile de l'électrovanne, celui-ci formant clapet pour l'ouverture et la fermeture.

Selon une seconde forme de réalisation des électrovannes, chaque logement 24, 26, 28, 30 des électrovannes est conformé pour recevoir une électrovanne-cartouche comportant un boîtier définissant une chambre abritant un noyau mobile ou piston. Le boîtier de l'électrovanne-cartouche définit, dans la chambre, un siège propre à recevoir en appui étanche la tête du noyau mobile formant clapet. Plus précisément, une électrovanne cartouche comporte un boîtier définissant une chambre et pourvu d'un siège. La chambre loge un noyau mobile (ou piston). Le siège peut recevoir en appui étanche ce noyau mobile dont la tête forme clapet lorsqu'elle est en appui étanche contre ce siège. La paroi du boîtier est percée d'au moins une lumière en communication avec un conduit d'amenée de fluide. Un capot de fermeture du boîtier de l'électrovanne est fixé sur une paroi du corps, un dispositif de pilotage de l'électrovanne est monté sur ce capot. Ce dispositif de pilotage est de type pneumatique.

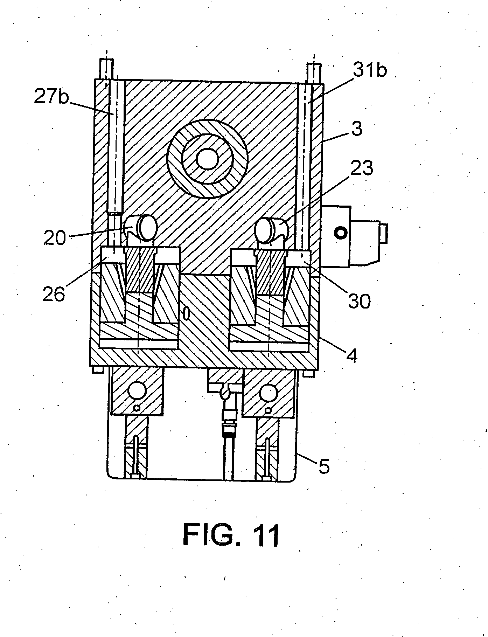

La figure 11 représente une vue en coupe selon le plan A-A de la figure 6 de l'ensemble de commande selon l'invention. Il peut être ainsi remarqué sur cette vue en coupe une forme de réalisation des logements des soupapes et plus précisément les logements 26, 30 des soupapes de soufflage et de recyclage, étant entendu que les logements pour les différentes soupapes prévus dans le bloc 4 logeant les soupapes sont tous identiques.

Il doit être compris qu'il a été représenté une forme de réalisation de l'emplacement des différentes soupapes dans leur bloc, mais que le mode de fonctionnement et l'emplacement de chaque soupape peut être modifié en fonction des pilotes de commande et des raccordements sur le flasque 6 arrière.

La présente invention porte également sur une installation de soufflage, à l'aide d'un fluide sous pression, de récipients à partir d'ébauches en matériau thermoplastique dont le corps est enfermé dans un moule de soufflage, ladite installation comportant une tuyère comprenant une extrémité conformée pour être mise en relation fonctionnelle étanche avec l'intérieur d'une ébauche et comportant plusieurs électrovannes pour la mise en liaison sélective de ladite tuyère avec respectivement une source de fluide sous moyenne pression pour le présoufflage, une source de fluide sous haute pression pour le soufflage et un échappement pour évacuer le fluide de présoufflage/soufflage, l'installation de soufflage comprenant au moins un ensemble de commande tel que décrit ci-dessus.

## Revendications

1. Machine rotative de soufflage de récipients du type comprenant plusieurs dispositifs de moulage et ensembles de commande du flux d'un fluide de soufflage, montés à la périphérie d'un carrousel, les uns à côté des autres, de manière à former une boucle rotative autour de l'arbre central dudit carrousel, chaque ensemble de commande étant constitué :
- d'un corps (3) logeant une buse (1) de soufflage et une tige (2) d'élongation qui est mobile axialement dans ladite buse (1),
- d'une pluralité de conduits permettant la circulation du fluide de soufflage entre ladite buse (1) de soufflage et au moins, d'une part, une source de fluide de soufflage et, d'autre part, une évacuation de fluide,
- de soupapes, du type électrovannes, aptes à commander la circulation du fluide de soufflage dans ladite pluralité de conduits de circulation du fluide,
**caractérisée en ce que** ledit corps (3) comporte, sur une seule et même face, un bloc (4) logeant lesdites soupapes, lequel bloc (4) est monté de manière amovible sur ladite face, laquelle face constituant la face avant, ou frontale, dudit corps (3), c'est-à-dire la face placée radialement vers l'extérieur de ladite boucle rotative.

2. Machine rotative de soufflage selon la revendication 1, **caractérisée en ce que** la pluralité de conduits comprend, d'une part, des conduits (20, 21, 22, 23) internes au corps (3) qui relient les soupapes à la buse (1) de soufflage, et, d'autre part, des conduits (25b, 27b, 29b, 31b) internes au corps (3) qui relient au moins une source de fluide de soufflage, et au moins une évacuation de fluide, auxdites soupapes.

3. Machine rotative de soufflage selon la revendication 2, **caractérisée en ce qu'**elle comprend un flasque (6) foré et monté de manière amovible sur l'arrière du corps (3), lequel flasque (6) comprend des conduits (25a, 27a, 29a, 31a) internes reliant au moins une source de fluide, et au moins une évacuation de fluide de soufflage, aux conduits internes (25b, 27b, 29b, 31b) du corps (3).

4. Machine rotative de soufflage selon la revendication 3, **caractérisée en ce que** le flasque (6) foré, et le bloc (4) logeant les soupapes, sont montés sur le corps (3) par vissage et les têtes des- vis sont orientées vers l'avant de l'ensemble de commande.

5. Machine rotative de soufflage selon la revendication 1, **caractérisée en ce que** les soupapes comprennent une soupape reliée à une première source de fluide de soufflage, une soupape reliée à une seconde source de fluide de soufflage à une pression plus élevée que le fluide de soufflage de la première source, une soupape de détente reliée à la buse de soufflage et apte à évacuer le fluide de soufflage soufflé dans le récipient vers ladite au moins une évacuation, et, une soupape de recyclage apte à recycler le fluide de soufflage soufflé dans le récipient en l'envoyant dans une source de fluide de soufflage.

6. Machine rotative de soufflage selon la revendication 1, **caractérisée en ce que** les soupapes sont des électrovannes placées dans des logements (24, 26, 28, 30) élancés suivant une direction sensiblement perpendiculaire à la buse (1) de soufflage, lesquels logements sont usinés de manière à définir, directement dans le bloc (4), la chambre propre à abriter le noyau mobile de l'électrovanne du type électrovanne-cartouche.

7. Machine rotative de soufflage selon la revendication 6, **caractérisée en ce qu'**elle comprend, monté de manière amovible sur l'avant du bloc (4), un boitier (5) logeant les pilotes des soupapes.

8. Machine rotative de soufflage selon la revendication 1, **caractérisée en ce que** la commande du mouvement de la buse (1) de soufflage est assurée au moyen d'un équipage (33) guidé solidaire de l'ensemble de commande, et actionné par une came qui agit sur un galet (34) dudit équipage.

9. Machine rotative de soufflage selon la revendication 8, **caractérisée en ce que** la buse (1) est pourvue d'une gorge (10) et **en ce que** une fourchette (35) guidée dans cette gorge (10) assure la transformation du mouvement du galet (34) sur la came en un mouvement de coulissement de l'équipage (33) mobile et de la buse (1) de soufflage.

10. Machine rotative de soufflage selon la revendication 8, **caractérisée en ce que** la contre force exercée pour le maintien du galet (34) de commande sur la came est établie par un ressort mécanique ou par un ressort pneumatique intégré sous la forme d'un piston solidaire et concentrique à la buse (1) de soufflage, ce ressort pneumatique translatant dans une chambre dont la partie supérieure est sous pression.

11. Machine rotative de soufflage selon la revendication 8, **caractérisée en ce que** la commande du mouvement de la buse (1) de soufflage est assurée pneumatiquement, la buse (1) étant solidaire d'un piston concentrique, translatant dans une chambre dont les parties supérieure et inférieure sont reliées à un distributeur pneumatique.

12. Machine rotative de soufflage selon la revendication 8, **caractérisée en ce que** le réglage de la position basse de la buse (1) de soufflage est réalisé par une butée (11) réglable sur cette buse (1) de soufflage, ladite butée (11) venant s'arrêter par un contact amorti sur la partie supérieure du corps (3) logeant la buse (1) de soufflage.

13. Ensemble de commande du flux d'un fluide de soufflage pour une machine rotative de soufflage de récipients qui comprend plusieurs dispositifs de moulage et ensembles de commande du flux d'un fluide de soufflage, montés à la périphérie d'un carrousel les uns à côté des autres de manière à former une boucle rotative autour de l'arbre central dudit carrousel, lequel ensemble de commande étant constitué :
- d'un corps (3) logeant une buse (1) de soufflage et une tige (2) d'élongation qui est mobile axialement dans ladite buse (1),
- d'une pluralité de conduits de circulation du fluide permettant la circulation du fluide de soufflage entre ladite buse (1) de soufflage et au moins, d'une part, une source de fluide de soufflage et, d'autre part, une évacuation de fluide,
- de soupapes, du type électrovannes, aptes à commander la circulation du fluide de soufflage dans ladite pluralité de conduits de circulation de fluide,
**caractérisé en ce que** ledit corps (3) comporte, sur une seule et même face, un bloc (4) logeant lesdites soupapes, lequel bloc (4) est monté de manière amovible sur ladite face, laquelle face constituant la face avant, ou frontale, dudit corps (3), c'est-à-dire la face placée radialement vers l'extérieur de ladite boucle rotative.

14. Ensemble de commande selon la revendication 13, **caractérisé en ce que** ledit corps (3) est de section rectangulaire et d'enveloppe sensiblement cubique, et il comprend, d'une part, des conduits (20, 21, 22, 23) internes qui relient les soupapes à la buse (1) de soufflage, et, d'autre part, des conduits (25b, 27b, 29b, 31b) internes qui relient au moins une source de fluide de soufflage, et au moins une évacuation de fluide, auxdites soupapes.

15. Ensemble de commande selon la revendication 14, **caractérisé en ce qu'**il comprend un flasque (6) foré et monté de manière amovible sur l'arrière du corps (3), lequel flasque (6) comprend des conduits (25a, 27a, 29a, 31a) internes reliant au moins une source de fluide, et au moins une évacuation de fluide de soufflage, aux conduits internes (25b, 27b, 29b, 31b) du corps (3).

16. Ensemble de commande selon la revendication 15, **caractérisé en ce que** les soupapes comprennent une soupape reliée à une première source de fluide de soufflage, une soupape reliée à une seconde source de fluide de soufflage à une pression plus élevée que le fluide de soufflage de la première source, une soupape de détente reliée à la buse de soufflage et apte à évacuer le fluide de soufflage soufflé dans le récipient vers ladite au moins une évacuation, et, une soupape de recyclage apte à recycler le fluide de soufflage soufflé dans le récipient en l'envoyant dans une source de fluide de soufflage.

17. Ensemble de commande selon la revendication 15, **caractérisé en ce que** les soupapes sont des électrovannes placées dans des logements (24, 26, 28, 30) élancés suivant une direction sensiblement perpendiculaire à la buse (1) de soufflage, lesquels logements sont usinés de manière à définir, directement dans le bloc (4), la chambre propre à abriter le noyau mobile de l'électrovanne du type électrovanne-cartouche.

18. Ensemble de commande selon la revendication 15, **caractérisé en ce que** le flasque (6) foré et le bloc (4) logeant les soupapes sont montés sur le corps (3) par vissage et les têtes des vis sont orientées vers l'avant de l'ensemble de commande.

19. Ensemble de commande selon la revendication 17, **caractérisé en ce qu'**il comprend, monté de manière amovible sur l'avant du bloc (4), un boitier (5) logeant les pilotes des soupapes.

## Patentansprüche

1. Rotationsblasformmaschine für Behälter, umfassend mehrere Formvorrichtungen und Steueranordnungen zur Durchflussregelung eines Blasfluids, die an der Peripherie eines Karussells so nebeneinander montiert sind, dass sie eine um die zentrale Welle des Karussells rotierende Schleife bilden, jede Steueranordnung bestehend aus:
- einem Korpus (3), der eine Blasdüse (1) und eine in der Düse (1) axial bewegliche Verlängerungsstange (2) aufnimmt,
- einer Mehrzahl von Leitungen, die die Zirkulation des Blasfluids zwischen der Blasdüse (1) und mindestens einer Blasfluidquelle einerseits und einem Fluidablauf andererseits ermöglichen,
- Magnetventilen, die geeignet sind, die Zirkulation des Blasfluids in der Mehrzahl von Leitungen zur Zirkulation des Fluids zu steuern,
**dadurch gekennzeichnet, dass** der Korpus (3) auf einer einzigen Seite einen die Ventile aufnehmenden Block (4) umfasst, wobei der Block (4) abnehmbar auf der Seite montiert ist und die Seite die Vorder- bzw. Stirnseite des Korpus (3), das heißt, die von der rotierenden Schleife radial nach außen angeordnete Seite bildet.

2. Rotationsblasformmaschine nach Anspruch 1, **dadurch gekennzeichnet, dass** die Mehrzahl von Leitungen einerseits interne Leitungen (20, 21, 22, 23) des Korpus (3) umfasst, die die Ventile mit der Blasdüse (1) verbinden, und andererseits interne Leitungen (25b, 27b, 29b, 31 b) des Korpus (3) umfasst, die mindestens eine Blasfluidquelle und mindestens einen Fluidablauf mit den Ventilen verbinden.

3. Rotationsblasformmaschine nach Anspruch 2, **dadurch gekennzeichnet, dass** sie einen mit Bohrungen versehenen und abnehmbar auf der Hinterseite des Korpus (3) montierten Deckel (6) umfasst, wobei der Deckel (6) interne Leitungen (25a, 27a, 29a, 31a) umfasst, die mindestens eine Fluidquelle und mindestens einen Blasfluidablauf mit den internen Leitungen (25b, 27b, 29b, 31 b) des Korpus (3) verbinden.

4. Rotationsblasformmaschine nach Anspruch 3, **dadurch gekennzeichnet, dass** der mit Bohrungen versehene Deckel (6) und der die Ventile aufnehmende Block (4) durch Verschraubung an dem Korpus (3) montiert sind und die Schraubenköpfe zur Vorderseite der Steueranordnung gerichtet sind.

5. Rotationsblasformmaschine nach Anspruch 1, **dadurch gekennzeichnet, dass** die Ventile ein mit einer ersten Blasfluidquelle verbundenes Ventil, ein mit einer zweiten Blasfluidquelle verbundenes Ventil, wobei das Blasfluid der zweiten Quelle einen höheren Druck aufweist als das Blasfluid der ersten Quelle, ein mit der Blasdüse verbundenes Expansionsventil, das geeignet ist, das in den Behälter geblasene Blasfluid in den mindestens einen Ablauf abzuleiten, und ein Rückführventil umfasst, das geeignet ist, das in den Behälter geblasene Blasfluid rückzuführen, indem es in eine Blasfluidquelle geschickt wird.

6. Rotationsblasformmaschine nach Anspruch 1, **dadurch gekennzeichnet, dass** die Ventile Magnetventile sind, die in Aufnahmen (24, 26, 28, 30) angeordnet sind, die in eine im Wesentlichen senkrecht zur Blasdüse (1) verlaufende Richtung ragen, wobei die Aufnahmen so gefertigt sind, dass sie direkt im Block (4) die zur Unterbringung des beweglichen Kerns der Magnetventilpatrone geeignete Kammer definieren.

7. Rotationsblasformmaschine nach Anspruch 6, **dadurch gekennzeichnet, dass** sie ein abnehmbar auf der Vorderseite des Blocks (4) montiertes, die Steuerregler der Ventile aufnehmendes Gehäuse (5) umfasst.

8. Rotationsblasformmaschine nach Anspruch 1, **dadurch gekennzeichnet, dass** die Steuerung der Bewegung der Blasdüse (1) mittels eines geführten Organs (33) erfolgt, das fest mit der Steueranordnung verbunden ist und durch einen Nocken betätigt wird, der auf ein Rad (34) des Organs einwirkt.

9. Rotationsblasformmaschine nach Anspruch 8, **dadurch gekennzeichnet, dass** die Düse (1) mit einer Rille (10) versehen ist und dass eine in dieser Rille (10) geführte Gabel (35) die Umwandlung der Bewegung des Rades (34) auf dem Nocken in eine Gleitbewegung des beweglichen Organs (33) und der Blasdüse (1) gewährleistet.

10. Rotationsblasformmaschine nach Anspruch 8, **dadurch gekennzeichnet, dass** die zum Halten des Steuerrads (34) auf dem Nocken ausgeübte Gegenkraft durch eine mechanische Feder oder durch eine integrierte pneumatische Feder in Form eines mit der Blasdüse (1) fest verbundenen und zu dieser konzentrischen Kolbens erzeugt wird, wobei sich diese pneumatische Feder in einer Kammer, deren oberer Teil unter Druck steht, bewegt.

11. Rotationsblasformmaschine nach Anspruch 8, **dadurch gekennzeichnet, dass** die Steuerung der Bewegung der Blasdüse (1) pneumatisch erfolgt, wobei die Düse (1) mit einem konzentrischen Kolben fest verbunden ist, der sich in einer Kammer bewegt, deren oberer und unterer Teil mit einem pneumatischen Wegeventil verbunden ist.

12. Rotationsblasformmaschine nach Anspruch 8, **dadurch gekennzeichnet, dass** die Einstellung der unteren Position der Blasdüse (1) durch einen einstellbaren Anschlag (11) an dieser Blasdüse (1) erfolgt, wobei dieser Anschlag (11) durch einen gedämpften Kontakt auf dem oberen Teil des die Blasdüse (1) aufnehmenden Korpus (3) zum Stehen kommt.

13. Steueranordnung zur Durchflussregelung eines Blasfluids für eine Rotationsblasformmaschine für Behälter, die mehrere Formvorrichtungen und Steueranordnungen zur Durchflussregelung eines Blasfluids umfasst, die an der Peripherie eines Karussells so nebeneinander montiert sind, dass sie eine um die zentrale Welle des Karussells rotierende Schleife bilden, die Steueranordnung bestehend aus:
- einem Korpus (3), der eine Blasdüse (1) und eine in der Düse (1) axial bewegliche Verlängerungsstange (2) aufnimmt,
- einer Mehrzahl von Leitungen zur Zirkulation des Fluids, die die Zirkulation des Blasfluids zwischen der Blasdüse (1) und mindestens einer Blasfluidquelle einerseits und einem Fluidablauf andererseits ermöglichen,
- Magnetventilen, die geeignet sind, die Zirkulation des Blasfluids in der Mehrzahl von Leitungen zur Zirkulation des Fluids zu steuern,
**dadurch gekennzeichnet, dass** der Korpus (3) auf ein und derselben Seite einen die Ventile aufnehmenden Block (4) umfasst, wobei der Block (4) abnehmbar auf der Seite montiert ist und die Seite die Vorder- bzw. Stirnseite des Korpus (3), das heißt die von der rotierenden Schleife radial nach außen angeordnete Seite bildet.

14. Steueranordnung nach Anspruch 13, **dadurch gekennzeichnet, dass** der Korpus (3) einen rechteckigen Querschnitt und eine im Wesentlichen kubische Hülle aufweist und einerseits interne Leitungen (20, 21, 22, 23) umfasst, die die Ventile mit der Blasdüse (1) verbinden, und andererseits interne Leitungen (25b, 27b, 29b, 31b) umfasst, die mindestens eine Blasfluidquelle und mindestens einen Fluidablauf mit den Ventilen verbinden.

15. Steueranordnung nach Anspruch 14, **dadurch gekennzeichnet, dass** sie einen mit Bohrungen versehenen und abnehmbar auf der Hinterseite des Korpus (3) montierten Deckel (6) umfasst, wobei der Deckel (6) interne Leitungen (25a, 27a, 29a, 31 a) umfasst, die mindestens eine Fluidquelle und mindestens einen Blasfluidablauf mit den internen Leitungen (25b, 27b, 29b, 31b) des Korpus (3) verbinden.

16. Steueranordnung nach Anspruch 15, **dadurch gekennzeichnet, dass** die Ventile ein mit einer ersten Blasfluidquelle verbundenes Ventil, ein mit einer zweiten Blasfluidquelle verbundenes Ventil, wobei das Blasfluid der zweiten Quelle einen höheren Druck aufweist als das Blasfluid der ersten Quelle, ein mit der Blasdüse verbundenes Expansionsventil, das geeignet ist, das in den Behälter geblasene Blasfluid in den mindestens einen Ablauf abzuleiten, und ein Rückführventil umfasst, das geeignet ist, das in den Behälter geblasene Blasfluid rückzuführen, indem es in eine Blasfluidquelle geschickt wird.

17. Steueranordnung nach Anspruch 15, **dadurch gekennzeichnet, dass** die Ventile Magnetventile sind, die in Aufnahmen (24, 26, 28, 30) angeordnet sind, die in eine im Wesentlichen senkrecht zur Blasdüse (1) verlaufende Richtung ragen, wobei die Aufnahmen so gefertigt sind, dass sie direkt im Block (4) die zur Unterbringung des beweglichen Kerns der Magnetventilpatrone geeignete Kammer definieren.

18. Steueranordnung nach Anspruch 15, **dadurch gekennzeichnet, dass** der mit Bohrungen versehene Deckel (6) und der die Ventile aufnehmende Block (4) durch Verschraubung an dem Korpus (3) montiert sind und die Schraubenköpfe zur Vorderseite der Steueranordnung gerichtet sind.

19. Steueranordnung nach Anspruch 17, **dadurch gekennzeichnet, dass** sie ein abnehmbar auf der Vorderseite des Blocks (4) montiertes, die Steuerregler der Ventile aufnehmendes Gehäuse (5) umfasst.

## Claims

1. Rotating machine for blow moulding containers, of the type comprising several moulding devices and assemblies for controlling the flow of a blowing fluid mounted side by side on the periphery of a carousel so as to form a loop rotating about the central shaft of said carousel, each control assembly comprising:
- a body (3) housing a blowing nozzle (1) and a drawing rod (2) which is axially displaceable in said nozzle (1),
- a plurality of pipes enabling the blowing fluid to circulate between said blowing nozzle (1) and at least one blowing fluid source on the one hand and a fluid discharge on the other hand,
- valves, of the solenoid valve type, configured to control the circulation of blowing fluid in said plurality of fluid circulation pipes,
**characterised in that** said body (3) comprises, on one and the same face, a block (4) housing said valves, which block (4) is mounted so as to be detachable from said face, which face constitutes the front or frontal face of said body (3), i.e. the face positioned radially towards the exterior of said rotating loop.

2. Rotating blowing machine as claimed in claim 1, **characterised in that** the plurality of pipes comprises pipes (20, 21, 22, 23) inside the body (3) connecting the valves to the blowing nozzle (1) on the one hand and pipes (25b, 27b, 29b, 31b) inside the body (3) connecting at least one blowing fluid source and at least one fluid discharge to said valves on the other hand.

3. Rotating blowing machine as claimed in claim 2, **characterised in that** it comprises a bored flange (6) mounted in a detachable arrangement on the rear of the body (3), which flange (6) comprises internal pipes (25a, 27a, 29a, 31a) connecting at least one fluid source and at least one blowing fluid discharge to the internal pipes (25b, 27b, 29b, 31b) of the body (3).

4. Rotating blowing machine as claimed in claim 3, **characterised in that** the bored flange (6) and the block (4) housing the valves are mounted on the body (3) by screwing and the screw heads are oriented towards the front of the control assembly.

5. Rotating blowing machine as claimed in claim 1, **characterised in that** the valves comprise a valve connected to a first blowing fluid source, a valve connected to a second blowing fluid source at a higher pressure than the blowing fluid of the first source, an expansion valve connected to the blowing nozzle and configured to discharge the blowing fluid blown into the container towards said at least one discharge, and a recycling valve configured to recycle the blowing fluid blown into the container by directing it to a blowing fluid source.

6. Rotating blowing machine as claimed in claim 1, **characterised in that** the valves are solenoid valves positioned in housings (24, 26, 28, 30) which become narrower in a direction substantially perpendicular to the blowing nozzle (1), which housings are machined so as to define, directly in the block (4), the chamber capable of housing the displaceable core of the solenoid valve based on the solenoid valve-cartridge type.

7. Rotating blowing machine as claimed in claim 6, **characterised in that** it comprises a casing (5) housing the pilots of the valves mounted in a detachable manner on the front of the block (4).

8. Rotating blowing machine as claimed in claim 1, **characterised in that** the movement of the blowing nozzle (1) is controlled by means of a guided mobile equipment (33) integral with the control assembly and actuated by a cam acting on a roller (34) of said equipment.

9. Rotating blowing machine as claimed in claim 8, **characterised in that** the nozzle (1) is provided with a throat (10) and **in that** a fork (35) guided in this throat (10) converts the movement of the roller (34) on the cam into a sliding movement of the mobile equipment (33) and blowing nozzle (1).

10. Rotating blowing machine as claimed in claim 8, **characterised in that** the counter-force exerted in order to hold the control roller (34) on the cam is generated by a mechanical spring or by a pneumatic spring integrated in the form of a piston integral with and concentric with the blowing nozzle (1), this pneumatic spring moving in translation in a chamber, the top part of which is placed under pressure.

11. Rotating blowing machine as claimed in claim 8, **characterised in that** the movement of the blowing nozzle (1) is pneumatically controlled, the nozzle (1) being integral with a concentric piston moving in translation in a chamber, the top and bottom parts of which are connected to a pneumatic distributor.

12. Rotating blowing machine as claimed in claim 8, **characterised in that** the bottom position of the blowing nozzle (1) is regulated by a stop (11) which can be adjusted on this blowing nozzle (1), said stop (11) being arrested by a damped contact on the top part of the body (3) housing the blowing nozzle (1).

13. Assembly for controlling the flow of a blowing fluid for a rotating machine for blow moulding containers, comprising several moulding devices and assemblies for controlling the flow of a blowing fluid mounted side by side on the periphery of a carousel so as to form a loop rotating about the central shaft of said carousel, which control assembly comprises:
- a body (3) housing a blowing nozzle (1) and a drawing rod (2) which is axially displaceable in said nozzle (1),
- a plurality of fluid circulation pipes enabling the blowing fluid to circulate between said blowing nozzle (1) and at least one blowing fluid source on the one hand and a fluid discharge on the other hand,
- valves, of the solenoid valve type, configured to control circulation of the blowing fluid in said plurality of fluid circulation pipes,
**characterised in that** said body (3) comprises, on one and the same face, a block (4) housing said valves, which block (4) is mounted so as to be detachable from said face, which face constitutes the front or frontal face of said body (3), i.e. the face positioned radially towards the exterior of said rotating loop.

14. Control assembly as claimed in claim 13, **characterised in that** said body (3) has a rectangular cross-section and a substantially cuboid overall shape and comprises internal pipes (20, 21, 22, 23) connecting the valves to the blowing nozzle (1) on the one hand and internal pipes (25b, 27b, 29b, 31b) connecting at least one blowing fluid source and at least one fluid discharge to said valves on the other hand.

15. Control assembly as claimed in claim 14, **characterised in that** it comprises a bored flange (6) mounted in a detachable arrangement on the rear of the body (3), which flange (6) comprises internal pipes (25a, 27a, 29a, 31a) connecting at least one fluid source and at least one blowing fluid discharge to the internal pipes (25b, 27b, 29b, 31b) of the body (3).

16. Control assembly as claimed in claim 15, **characterised in that** the valves comprise a valve connected to a first blowing fluid source, a valve connected to a second blowing fluid source at a higher pressure than the blowing fluid of the first source, an expansion valve connected to the blowing nozzle and configured to discharge the blowing fluid blown into the container towards said at least one discharge, and a recycling valve configured to recycle the blowing fluid blown into the container by directing it to a blowing fluid source.

17. Control assembly as claimed in claim 15, **characterised in that** the valves are solenoid valves positioned in housings (24, 26, 28, 30) which become narrower in a direction substantially perpendicular to the blowing nozzle (1), which housings are machined so as to define, directly in the block (4), the chamber capable of housing the displaceable core of the solenoid valve based on the solenoid valve-cartridge type.

18. Control assembly as claimed in claim 15, **characterised in that** the bored flange (6) and the block (4) housing the valves are mounted on the body (3) by screwing and the screw heads are oriented towards the front of the control assembly.

19. Control assembly as claimed in claim 17, **characterised in that** it comprises a casing (5) housing the pilots of the valves mounted in a detachable manner on the front of the block (4).
